# FASCICULE DE BREVET EUROPEEN

(11) **EP 1 252 960 B1**
(45) Date de publication et mention de la délivrance du brevet: **21.09.2005**
(21) Numéro de dépôt: 01201540.0
(22) Date de dépôt: 26.04.2001
(51) Int. Cl.: B23K 7/00

(54) **Oxycoupage de brames froides ou chaudes sans cordons**
Verfahren zum Brennschneiden von warmen oder kalten Brammen ohne Schweissen
Oxycutting method for warm or cold slabs without bead

(43) Date de publication de la demande: 30.10.2002
(73) Titulaire: Eon Holding SA, 2450 Luxembourg (LU)
(72) Inventeur: Donze Bertrand, F-55100 Dugny (LU); Donze Valerie, F-54520 Laxou (LU); Donze Pascal, F-54000 Nancy (LU); Rozot Thierry, F-54115 Thorey Lyautey (LU)
(74) Mandataire: Waxweiler, Jean

(56) Documents cités:
- DE-C- 3 742 175
- FR-A- 2 308 458
- FR-A- 2 746 686
- US-A- 2 334 250

## Description

L'invention concerne un procédé d'oxycoupage d'une brame parallélépipède à l'aide d'un ou plusieurs chalumeaux d'oxycoupage et un dispositif pour sa mise en oeuvre suivant le préambule des revendications 1, 8 et 14. Un exemple de ce procédé et de ce dispositif est décrit dans FR 2 746 686.

Divers procédés d'oxycoupage sont connus dans l'art, comme par exemple celui décrit dans la demande de brevet française numéro de publication 2 746 686. Dans ce procédé la brame est placée sur chant sur une série de rouleaux entraînés pour laisser défiler la brame devant un chalumeau d'oxycoupage entre des paires de rouleaux verticaux montés fous.

Dans la demande de brevet européen numéro 00202767.0 du 4 août 2000, un procédé d'oxycoupage de brames et un dispositif pour sa mise en oeuvre sont décrits. Les brames sont refendues ou débitées en position horizontale ou sur chant, suspendus par des électro-aimants au-dessous de rouleaux d'entraînement.

Ces procédés et systèmes présentent certains inconvénients comme par exemple lors du traitement de brames de dimensions extrêmes (stabilité placée sur chant) ou de brames à températures élevées.

Le but de l'invention est de fournir un procédé d'oxycoupage de brames et un dispositif pour sa mise en oeuvre qui ne possèdent pas de tels inconvénients.

Selon l'invention ce but est réalisé par un procédé d'oxycoupage d'une brame à l'aide d'au moins un chalumeau d'oxycoupage dans un poste de travail, comprenant l'étape de réaliser un mouvement relatif entre la brame et le au moins un chalumeau d'oxycoupage, la brame se trouvant dans une position de coupe, dans laquelle la brame est disposée de sorte que le plan principal de la brame forme un angle de -10° à -20° par apport au plan vertical.

Pour le travail continu deux postes de travail sont prévus en ligne, dans chaque poste de travail la brame se trouvant dans une position de coupe, dans laquelle la brame est disposée de sorte que le plan principal de la brame forme un angle de -10° à -20° par apport au plan vertical, chacun des postes de travail étant utilisé pour le chargement, l'oxycoupage et le déchargement d'une brame à couper, l'oxycoupage se faisant alternativement sur l'un des deux postes de travail. Aussi un des postes de travail peut servir au chargement de la brame et l'autre des postes de travail peut servir au déchargement de la brame coupée, et un poste de travail supplémentaire peut être prévu en ligne entre les deux dits postes de travail pour exécuter l'oxycoupage de la brame dans sa position de -10° à -20° de la verticale, la brame à couper chargée sur le poste de travail de chargement étant déplacée du poste de travail de chargement audit poste de travail supplémentaire et puis sur le poste de travail de déchargement pour y décharger la brame coupée, la brame étant soumise à l'opération d'oxycoupage lors de son passage dans le poste de travail supplémentaire.

La brame peut être refendue ou débitée pendant l'oxycoupage par le mouvement relatif réalisé entre la brame et le chalumeau d'oxycoupage.

Les brames peuvent être chargées en continu pour être transportées devant le chalumeau d'oxycoupage et être alors refendues ou débitées suivant la direction du mouvement relatif entre chaque brame et le chalumeau d'oxycoupage.

Suivant l'invention, le dispositif pour la mise en oeuvre du procédé comprend au moins un chalumeau d'oxycoupage pour oxycouper une brame en réalisant un mouvement relatif entre la brame et le chalumeau d'oxycoupage, et un moyen pour tenir une brame à couper de sorte que le plan principal de la brame forme un angle de -10° à -20° par rapport à un plan vertical.

Ledit moyen pour tenir une brame peut comprendre des rouleaux placés par paires en équerre pour recevoir et tenir la brame à couper sur chant sous l'angle de -10° à -20° et pour former un plan d'appui oblique.

Au moins une paire de règles mobiles à l'unisson le long du et en cavalier sur ledit plan d'appui oblique du moyen pour tenir une brame peut être prévue pour recevoir chacune un desdits au moins un chalumeau d'oxycoupage et son dispositif d'ébavurage associé et placer ledit un chalumeau d'oxycoupage et son moyen d'ébavurage associé à un endroit de coupage désiré le long de l'extension longitudinale d'une brame tenue par le moyen pour tenir une brame pour l'oxycouper audit endroit de coupage désiré.

Pour le fonctionnement continu de l'oxycoupage de brames, peuvent être prévus en ligne: un deuxième moyen pour tenir une brame de sorte que le plan principal de la brame forme un même angle de -10° à -20° par rapport au plan vertical, ledit deuxième moyen pour tenir une brame comprenant également des rouleaux placés par paires en équerre pour recevoir et tenir la brame à couper sur chant sous l'angle de -10° à -20° et pour former un second plan d'appui oblique, ladite au moins une paire de règles mobiles à l'unisson le long du et en cavalier sur ledit plan d'appui oblique du moyen pour tenir un brame et recevoir chacun un desdits au moins un chalumeau d'oxycoupage et son dispositif d'ébavurage associé, pour placer ledit un chalumeau d'oxycoupage et son dispositif d'ébavurage associé à l'endroit de coupage désiré le long de l'extension longitudinale d'une brame tenue par ledit moyen pour tenir une brame pour l'oxycouper audit endroit désiré, pouvant être déplacée pour la placer en cavalier sur ledit second plan d'appui oblique pour l'oxycoupage d'une brame chargée sur ledit deuxième moyen pour tenir une brame à l'endroit de coupage désiré.

Un poste de travail peut être placé en ligne entre ledit moyen pour tenir une brame et ledit deuxième moyen pour tenir une brame, ledit poste de travail comprenant une suite de rouleaux placés par paires en équerre pour recevoir une brame sur chant sous un angle de -10° à -20° par rapport au plan vertical sur un troisième plan d'appui oblique formés par ladite suite des rouleaux placés par paires en équerre, ladite paire de règles étant mobile à l'unisson et en cavalier sur ledit troisième plan-d'appui oblique, et lesdits rouleaux desdites paires de rouleaux recevant la brame sur chant étant motorisés pour déplacer la brame dudit moyen pour tenir une brame sur ledit poste de travail pour l'oxycoupage de la brame et pour déplacer la brame coupée dudit poste de travail sur ledit deuxième moyen pour tenir une brame pour décharger la brame coupée.

Lesdits moyens pour tenir une brame peuvent être basculés avec leur plan d'appui oblique dans une position horizontale pour charger une brame ou décharger une brame coupée, respectivement.

Selon l'invention un dispositif d'oxycoupage de brames à l'aide d'au moins un chalumeau d'oxycoupage, peut aussi comprendre une aire d'alimentation, une aire d'oxycoupage pourvue dudit au moins un chalumeau d'oxycoupage auquel fait face un dispositif d'ébavurage associé, la brame se trouvant dans ladite aire d'oxycoupage avec son plan principal en position horizontale entre ledit au moins un chalumeau d'oxycoupage et son dispositif d'ébavurage associé, et une aire de déchargement des brames, des moyens étant prévus pour faire circuler la brame de l'aire d'alimentation vers l'aire d'oxycoupage et puis vers l'aire de déchargement, et le chalumeau d'oxycoupage pouvant être déplacé sur une ligne perpendiculaire à l'extension longitudinale de la brame d'un bord longitudinal de celle-ci vers le bord longitudinal opposé permettant de débiter les brames soumises à l'opération d'oxycoupage et pouvant être arrêté en tout point quelconque de ladite ligne perpendiculaire de sorte à permettre le refendage des brames soumises à la procédure d'oxycoupage et soumises pendant l'opération d'oxycoupage à un mouvement en direction de l'extension longitudinale de la brame.

L'aire d'alimentation et/ou l'aire de déchargement peut comprendre une table élévatrice ajustable de sorte que son plan de support se trouve au niveau de l'aire d'oxycoupage.

L'aire d'oxycoupage peut être constitué d'un nombre suffisant de rouleaux de support à axe perpendiculaire à la direction de déplacement des brames de l'aire d'alimentation vers l'aire de déchargement formant un plan d'appui, ledit au moins un chalumeau d'oxycoupage et son dispositif d'ébavurage associé étant disposé dans l'espace entre deux rouleaux de support voisins et de part et d'autre du plan d'appui formé par les rouleaux de support.

Les moyens prévus pour faire circuler les brames peuvent comprendre des pousseurs de brames dans l'aire d'alimentation et des rouleaux de support motorisés.

Le dispositif peut comprendre des rouleaux de support motorisés supplémentaires de part et d'autre de l'aire d'oxycoupage pour former un train de rouleaux de transfert et l'aire d'alimentation et l'aire de déchargement peuvent être disposés latéralement dudit train de transfert, et des pousseurs de brames pour décharger les brames débitées ou refendues peuvent être prévus dans l'aire de déchargement.

L'invention sera maintenant décrite à titre d'exemples non-limitatifs avec référence aux dessins annexés dans lesquels:
la figure 1 est une vue de face et une vue latérale d'un mode de réalisation de l'invention avec deux postes de travail utilisables alternativement pour l'oxycoupage d'une brame à l'aide d'un ensemble chalumeau d'oxycoupage/ébavureur mobile d'un poste vers l'autre poste et vice-versa;
la figure 2 représente le mode de réalisation de l'invention de la figure 1, avec chacun des postes chargé d'une brame à couper, l'ensemble chalumeaux d'oxycoupage/ébavureur en action sur le poste de gauche;
la figure 3 représente le mode de réalisation de l'invention de la figure 1, dans l'état de la brame sur le poste de gauche coupée et prête au déchargement et l'ensemble chalumeau d'oxycoupage/ébavureur en action sur le poste de droite;
la figure 4 représente de façon schématique l'invention de la figure 1 avec un poste de travail intercalé entre les deux postes de gauche et de droite, l'ensemble chalumeau d'oxycoupage/ébavureur agissant sur le poste de travail central;
la figure 5 représente un autre mode de réalisation de l'invention; et
la figure 6 représente une variante du mode de réalisation de l'invention de la figure 5.

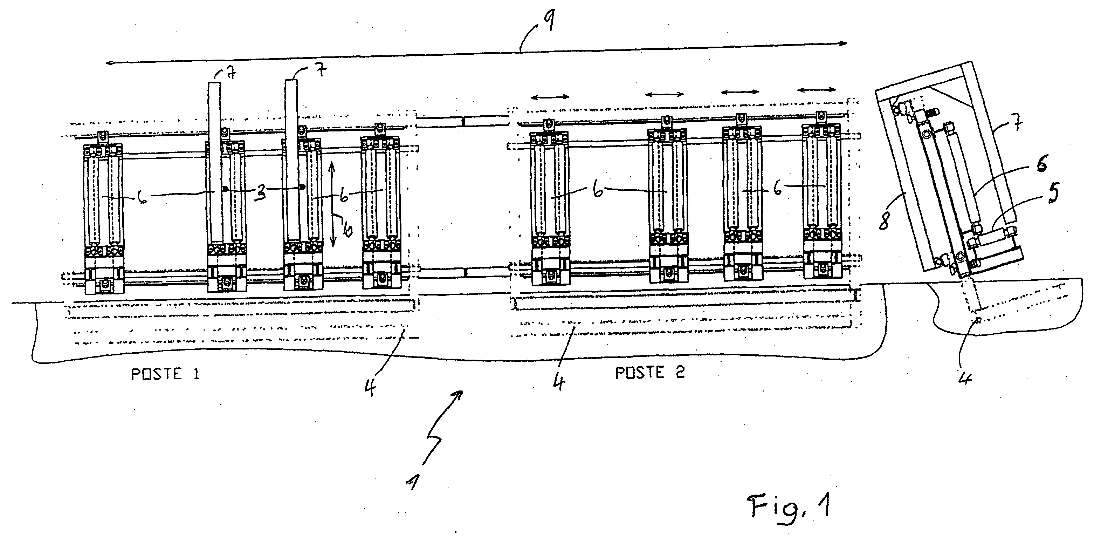

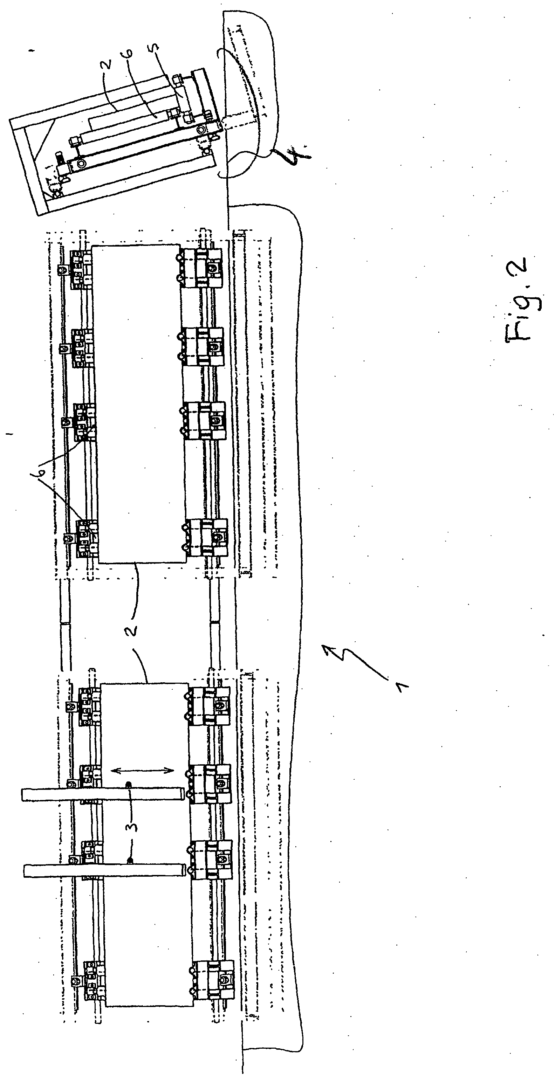

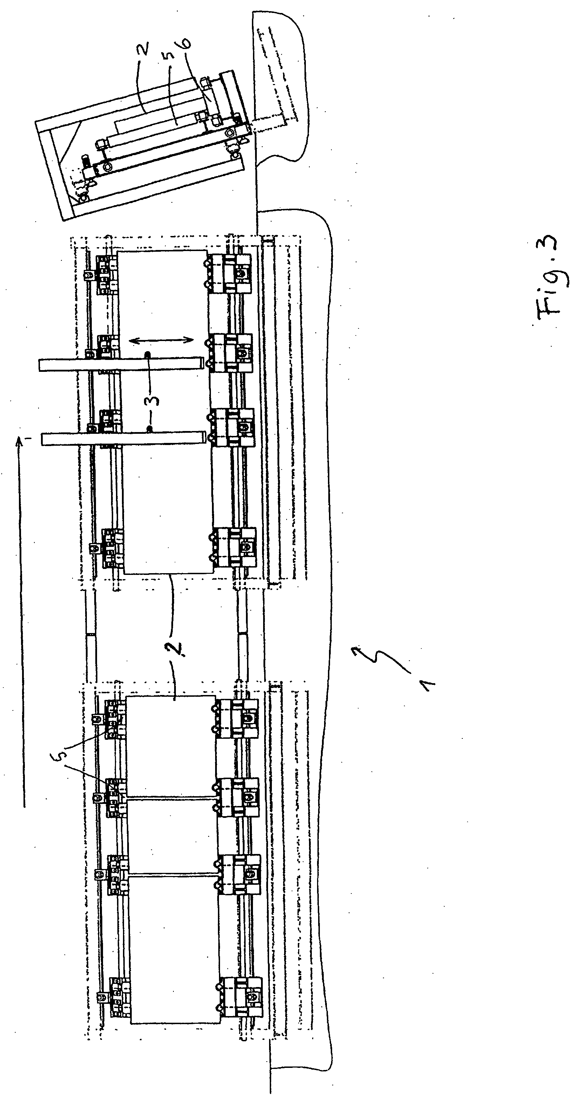

Les figures 1 à 3 représentent un mode de réalisation d'un dispositif 1 d'oxycoupage de brames 2 avec deux postes de travail, à l'aide d'au moins un chalumeau d'oxycoupage 3 selon l'invention, en vue de face et vue latérale, dans différents états d'utilisation, soit au repos sans brame, en service pour l'oxycoupage d'une brame sur le poste gauche, le poste de droite étant déjà chargée d'une autre brame 2 à couper, et en service pour l'oxycoupage de la brame 2 sur le poste de droite, une brame 2, venant d'être coupée sur le poste de gauche, étant prête pour être enlevée.

Chaque poste de travail comprend un cadre support 4 basculable entre une position horizontale (non montrée) et une position inclinée sous un angle par rapport à la verticale de -20° à -10°, de préférence -15°, ainsi que représenté dans les figures 1 à 3.

Sur le cadre support 4 on trouve plusieurs paires de rouleaux 5, 6 montés en équerre servant à recevoir une brame 2 sur chant sur les rouleaux inférieurs 6, les rouleaux 5 formant un plan d'appui oblique pour une brame 2 à couper. Ces paires de rouleaux 5, 6 de chaque poste de travail sont chacune mobile le long de l'extension longitudinale du cadre support 4 associé en utilisant des moyens appropriés connus par l'homme de l'art. Ceci permet de placer chaque paire de rouleaux 5, 6 à l'endroit approprié où ils ne gênent pas l'opération du chalumeau d'oxycoupage 3 pour couper la brame 2 reposant sur les rouleaux inférieurs 6 sur chant et sur les rouleaux 5 formant le plan d'appui oblique.

Au moins une paire de règles 7, 8 montées par des moyens appropriés en cavalier sur le cadre support 4 pour être mobiles le long de l'extension du cadre support 4 de chaque poste du dispositif 1 d'oxycoupage de brames 2 en direction de la double flèche 9, reçoivent ledit au moins un chalumeau d'oxycoupage 3 et l'autre ledit dispositif d'ébavurage (non représenté) associé au chalumeau d'oxycoupage. Le chalumeau d'oxycoupage 3 et son dispositif de d'ébavurage associé se trouvent l'un en face de l'autre et de part et d'autre des rouleaux 5; en service la brame 2 à couper se trouve entre eux.

La chalumeau d'oxycoupage 2 et son dispositif d'ébavurage associé sont mobiles le long de leur règle 7, 8 respective en direction de la double flèche 10. En service sur une brame à couper 2, le chalumeau coupe la brame 2, transversalement à son extension longitudinale; la brame 2 est débitée.

L'opération de découpage de brames se passe comme suit: Un des cadres support 4 est rabattu dans la position horizontale. Une brame 2 à couper est chargée à l'aide d'un moyen de manutention appropriée, c-à-d. de levage ou pousseur sur les rouleaux 5 jusqu'à toucher les rouleaux 6. Le cadre support 4 est basculé dans la position de coupe faisant un angle de -20° à -10° par rapport à la verticale, de préférence 15°. Le chalumeau d'oxycoupage 2 est déplacé le long de l'extension longitudinale du cadre 4 à l'endroit de la brame 2 ou celle-ci est à couper. Si le chalumeau d'oxycoupage 2 et son dispositif d'ébavurage associé doivent alors se trouver à l'endroit de l'espace libre entre deux paires de rouleaux 5, 6. Si tel n'est pas le cas, le ou les paire(s) de rouleaux 5, 6 qui gênent le fonctionnement du chalumeau 2 doivent être ajustées le long du cadre support 4 de sorte à ne plus gêner l'opération d'oxycoupage. Le chalumeau d'oxycoupage 3 et son dispositif d'ébavurage sont déplacés le long des règles 7, 8 jusqu'au bord supérieur ou inférieur de la brame 2 et l'opération d'oxycoupage est démarrée. Ensuite le chalumeau 3 et son dispositif d'ébavurage sont déplacés dans la direction de la double flèche 10 vers le bord opposé inférieur ou supérieur de la brame 2 et l'opération d'oxycoupage est terminée, quand le bord opposé est atteint.

Pendant le temps qui s'est passé jusqu'à l'arrêt de l'oxycoupage de la brame 2, une autre brame 2 a été chargée sur le second poste de travail suivant la procédure qui vient d'être décrite. L'opération d'oxycoupage de la première brame 2 terminée, les règles 7, 8 sont déplacées avec le chalumeau d'oxycoupage 2 et le dispositif d'ébavurage vers l'autre poste de travail dont le cadre de support 4 forme un angle identique par rapport à la verticale que le cadre support 4 du premier poste de travail sur lequel l'opération d'oxycoupage vient de se terminer. Ainsi lesdites règles 7, 8 peuvent être déplacées en cavalier sur le cadre support 4 de l'autre poste de travail à l'endroit où la brame 2 chargée doit être découpée et les mêmes opérations de contrôle, d'ajustage et de coupe qui viennent d'être décrites sont répétées pour la brame 2 chargé sur cet autre poste de travail.

Entre-temps le cadre support 4 du premier poste de travail a été abaissé dans la position horizontale et la brame 2 coupée a été enlevée par ledit moyen de manutention. Une autre brame 2 à couper est chargée sur ledit cadre support 4. Le dispositif 1 l'oxycoupage décrit permet de couper des brames 2 suivant un procédé continu. Si un procédé non-continu est suffisant, il et possible de ne prévoir qu'un poste de travail ayant un endroit de parcage pour ladite au moins une paire de deux règles 7, 8 pendant le chargement et déchargement des brames 2 sur le cadre support 4 unique.

Suivant les besoins, c-à-d. si on veut exécuter en même temps sur une brame 2 plus d'une opération de découpage, on peut prévoir plus qu'une paire de règles 7, 8 mobiles en cavalier sur le cadre support 4 et les chalumeaux d'oxycoupage 2 et dispositifs d'ébavurage associés nécessaires ; ainsi une paire supplémentaire 7, 8 est représentée dans les figures 1, 2 et 3.

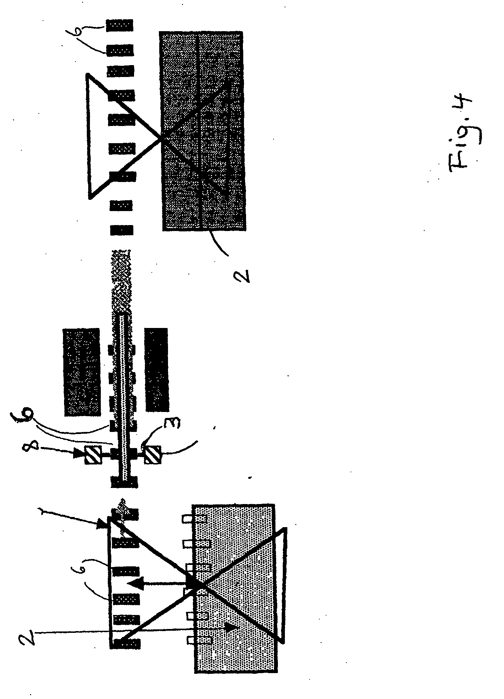

Le dispositif décrit ne permet que difficilement de refendre une brame 2 par oxycoupage. A cette fin on peut prévoir entre les deux postes de travail qui viennent d'être décrits et en ligne avec ceux-ci un troisième poste de travail à cadre support 4 ajustable dans une position de travail entre -20° et -10° par rapport à la verticale, mais non nécessairement basculable jusqu'en position horizontale, mais pour le reste identique aux deux autres postes décrits plus haut. Un tel dispositif est représenté de façon schématique dans la figure 4.

Dans le mode de réalisation de la figure 4, les règles 7, 8 avec le chalumeau d'oxycoupage 3 et le système d'ébavurage associé sont en principe mobiles sur le cadre support 4 du troisième poste de travail, tout en pouvant être déplacés sur les deux autres postes pour des travaux particuliers possibles. En plus, dans ce mode de réalisation, les rouleaux 6 inférieurs ou une partie en moins de ces rouleaux, peuvent être motorisés pour déplacer la brame 2, après avoir été chargée sur le poste fonctionnant pour le chargement, vers le troisième poste de travail pour l'oxycoupage de la brame, et déplacer la brame 2 ensuite vers le poste suivant fonctionnant pour décharger la brame 2 coupée. Comme dans le mode de réalisation décrit en rapport avec les figures 1 à 3, les cadres support 4 des postes extrêmes peuvent être rabattus dans la position horizontale pour le chargement d'une brame 2 sur les rouleaux 5 ou le déchargement d'une brame 2 coupée des rouleaux 5.

Le nombre de paires de règles 7, 8 dépendra du nombre de pièces de brame à réaliser à partir d'une brame 2 à refendre. Avant de refendre une brame, il est également possible de d'abord débiter la brame 2. Le mode de réalisation représenté à la figure permet donc de soit débiter, soit refendre, soit aussi débiter et refendre des brames en continu.

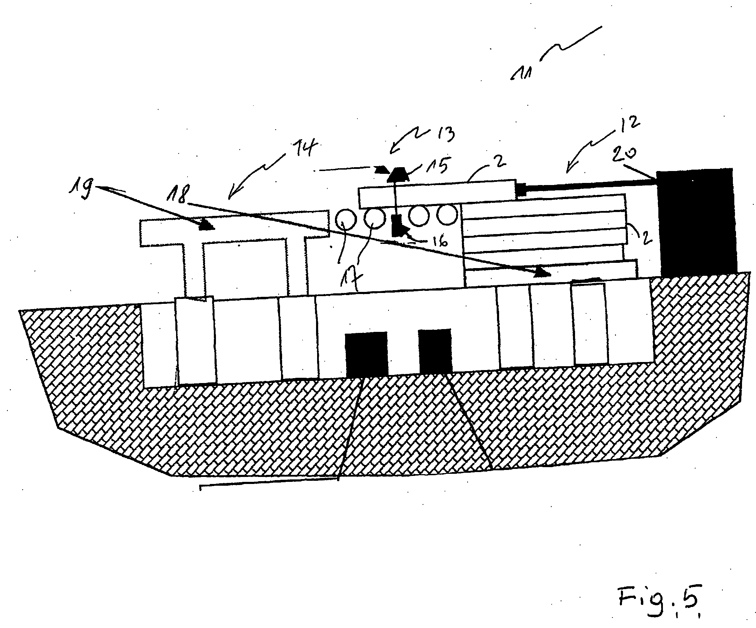

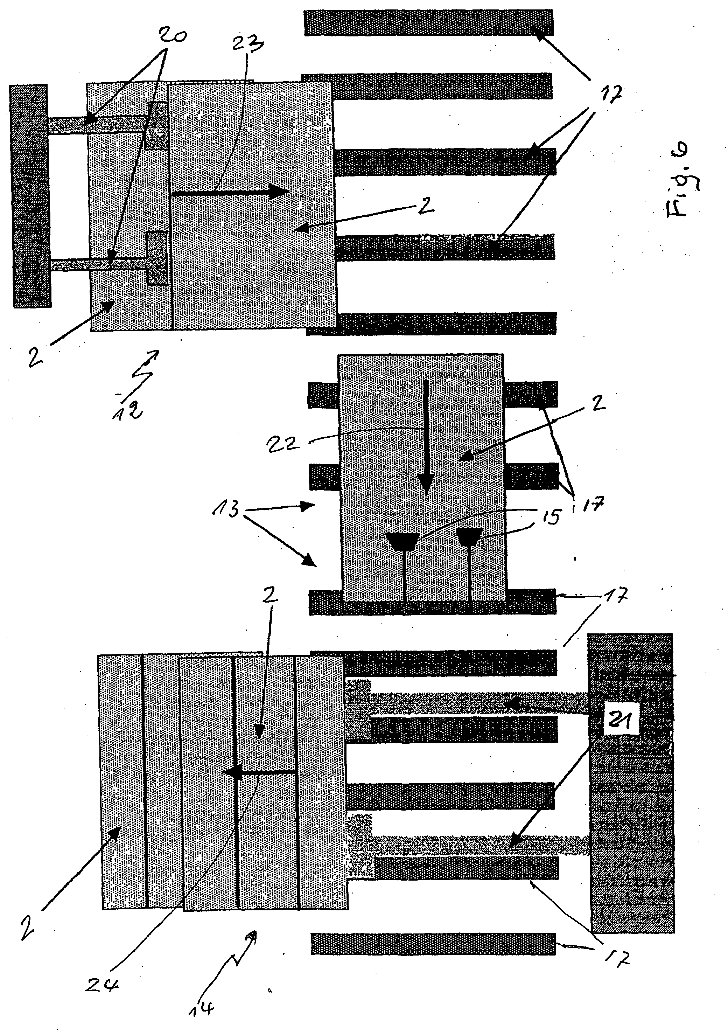

Un mode de réalisation supplémentaire d'un dispositif d'oxycoupage de brames est représenté aux figures 5 et 6. Le dispositif d'oxycoupage comprend une aire 12 de chargement de brames 2, aire 13 de travail où l'oxycoupage des brames 2 est réalisé à l'aide d'un chalumeau d'oxycoupage 15 auquel fait face un dispositif de d'ébavurage 16, et une aire 14 de déchargement de la brame 2 coupée. Lors de l'opération d'oxycoupage la brame 2 passe en position horizontale entre le chalumeau d'oxycoupage 15 et le dispositif d'ébavurage 16 sur des rouleaux de support 17. L'ensemble chalumeau 15 et dispositif d'ébavurage 16 se trouve entre deux rouleaux de support 17 et est mobile en direction axiale des rouleaux 17 transversalement à la brame 2 d'un bord longitudinal à l'autre bord longitudinal pour débiter la brame 2 au repos pendant l'oxycoupage, ou pour ajuster le chalumeau d'oxycoupage 2 en un endroit précis entre les deux bords longitudinaux de la brame 2 pour refendre la brame 2 se déplaçant en direction longitudinale sur les rouleaux 17 pendant l'opération d'oxycoupage.

Dans l'aire de chargement 12, aussi bien que dans l'aire de déchargement 14 on peut prévoir une table élévatrice 18 ou 19 ajustable de sorte que le plan de la table 18 ou 19 ou le plan supérieur d'une brame 2 ou d'une pile de brames se trouve dans le plan formé par les rouleaux 17. Un moyen pousseur 20 hydraulique ou mécanique est prévu pour pousser la brame 2 de la table 18 ou brame 2 supérieur d'une pile de brames sur la table élévatrice 18 dans et à travers la zone de travail 13. Aussi certains des rouleaux 17 peuvent être motorisés pour transporter la brame dans et hors de l'aire 13 de travail dans l'aire 14 de déchargement ou un autre moyen pousseur ou de manutention, non représenté, enlève la brame ou une pile de brames. La table élévatrice 19 est ajustable en hauteur de sorte que son plan ou la surface supérieure d'une brame 2 sur la table 19 se trouve dans le même plan que le plan formé par les rouleaux de support 17 pour recevoir la brame 2 coupée, c-à-d. débitée ou refendue.

La figure 6 est une représentation schématique d'une variante du dispositif d'oxycoupage de brames selon la figure 6. Le train des rouleaux de support 17 est prolongé de part et d'autre de l'aire 13 de travail dans les aires de chargement 12 et 14 et les tables élévatrices 18, 19 sont placées à côté des rouleaux de support 17 dans lesdites zones de chargement 12 et de déchargement 14. Le niveau desdites tables ou la surface supérieur des brames déposées sur elles se trouvent dans le même plan que le plan de support formé par les rouleaux de support 17.

Cette variante représentée à la figure 6 du mode de réalisation de la figure 5 permet le refendage aisé et rapide d'une brame 2 tout en permettant également le débit de brames 2 pour le fait de pouvoir déplacer le chalumeau d'oxycoupage 2 transversalement à l'extension longitudinale d'une brame 2 d'un bord longitudinal vers l'autre bord longitudinal de la brame 2, déplacement également requis pour ajuster différentes largueurs des morceaux de brame refendue.

La brame 2 refendue est poussée par un moyen pousseur 10 de la table 18 de l'aire de chargement 12, en direction de la flèche 23 sur les rouleaux 17, qui la transportent vers et à travers l'aire de travail 12 où la brame 2 est, p.ex., refendue en trois morceaux de brame de largeurs égales ou différentes à l'aide de chalumeaux d'oxycoupage 15. Le transport de la brame 2 continue en direction de la flèche 22 sur les rouleaux 17 dans l'aire de déchargement 14 ou les morceaux de la brame refendue sont poussés par le moyen pousser 21 en direction de la flèche 24 sur la table 19 de l'aire de déchargement 14.

## Revendications

1. Procédé d'oxycoupage d'une brame (2) à l'aide d'au moins un chalumeau d'oxycoupage (3) dans un poste de travail, comprenant l'étape de réaliser un mouvement relatif entre la brame (2) et le au moins un chalumeau d'oxycoupage, la brame (2) se trouvant dans une position de coupe, **caractérisé en ce que** dans la position de coupe la brame (2) est disposée de sorte que le plan principal de la brame forme un angle de -10° à -20° par apport au plan vertical.

2. Procédé d'oxycoupage selon la revendication 1, **caractérisé en ce que** pour le travail continu deux postes de travail sont prévus en ligne, que dans chaque poste de travail la position de coupe la brame (2) est disposée de sorte que le plan principal de la brame forme un angle de -10° à -20° par apport au plan vertical, et que chacun des postes est utilisé pour le chargement, l'oxycoupage et le déchargement d'une brame (2) à couper, et que l'oxycoupage se fait alternativement sur l'un des deux postes de travail.

3. Procédé d'oxycoupage selon la revendication 2, **caractérisé en ce que** l'un des postes de travail sert au chargement de la brame (2) à couper et que l'autre des postes de travail sert au déchargement de la brame (2) coupée, qu'un poste de travail supplémentaire est prévu en ligne entre les deux dits postes de travail pour exécuter l'oxycoupage de la brame (2) dans une position de coupe de -10° à -20° de la verticale, que la brame (2) à couper chargée sur le poste de travail de chargement est déplacée du poste de travail de chargement audit poste de travail supplémentaire et puis sur le poste de travail de déchargement pour y décharger la brame coupée, la brame (2) étant soumise à l'opération d'oxycoupage lors de son passage dans le poste de travail supplémentaire.

4. Procédé d'oxycoupage selon une quelconque des revendications 1 à 3, **caractérisé en ce que** la brame (2) est refendue pendant l'oxycoupage.

5. Procédé d'oxycoupage selon une quelconque des revendications 1 ou 2, **caractérisé en ce que** la brame (2) est débitée lors du mouvement relatif entre la brame (2) et le chalumeau d'oxycoupage (3).

6. Procédé d'oxycoupage selon la revendication 3, **caractérisé en ce que** la brame (2) est arrêtée dans le poste de travail supplémentaire pour utiliser le mouvement relatif entre la brame (2) et le chalumeau d'oxycoupage (3) pour débiter la brame.

7. Procédé d'oxycoupage selon la revendication 1, **caractérisé en ce que** les brames (2) sont chargées en continu pour être transportées devant le chalumeau d'oxycoupage (3) et sont alors refendues ou débitées suivant la direction du mouvement relatif entre chaque brame (2) et le chalumeau d'oxycoupage (3).

8. Dispositif pour la mise en oeuvre du procédé selon une quelconque des revendications 1 à 7, comprenant au moins un chalumeau d'oxycoupage (3) pour oxycouper une brame en réalisant un mouvement relatif entre la brame et le chalumeau d'oxycoupage (3), **caractérisé par** un moyen (4) pour tenir une brame (2) à couper de sorte que le plan principal de la brame forme un angle de -10° à -20° par rapport à un plan vertical.

9. Dispositif selon la revendication 8, **caractérisé en ce que** ledit moyen (4) pour tenir une brame (2) comprend des rouleaux (5,6) placés par paires en équerre pour recevoir et tenir la brame à couper sur chant sous l'angle de -10° à -20° et pour former un plan d'appui oblique.

10. Dispositif selon la revendication 9, **caractérisé par** au moins une paire de règles (7,8) mobiles à l'unisson le long du et en cavalier sur ledit plan d'appui oblique du moyen (4) pour tenir une brame (2) et recevant chacune un desdits au moins un chalumeau d'oxycoupage (3) et son dispositif d'ébavurage associé pour placer ledit un chalumeau d'oxycoupage (3) et son moyen d'ébavurage associé à un endroit de coupage désiré le long de l'extension longitudinale d'une brame (2) tenue par ledit moyen (4) pour tenir une brame (2) pour l'oxycouper audit endroit de coupage désiré.

11. Dispositif selon la revendication 9, **caractérisé en ce que**, pour le fonctionnement continu de l'oxycoupage de brames (2), sont prévues en ligne: un deuxième moyen (4) pour tenir une brame (2) de sorte que le plan principal de la brame (2) forme un même angle de -10° à -20° par rapport au plan vertical, ledit deuxième moyen (4) pour tenir une brame (2) comprenant également des rouleaux (5,6) placés par paires en équerre pour recevoir et tenir la brame (2) à couper sur chant sous l'angle de -10° à -20° et pour former un second plan d'appui oblique, ladite au moins une paire de règles (7,8) mobiles à l'unisson le long du et en cavalier sur ledit plan d'appui oblique du moyen (4) pour tenir une brame (2) et recevont chacun un desdits au moins un chalumeau d'oxycoupage (3) et son dispositif d'ébavurage associé, pour placer ledit un chalumeau d'oxycoupage (2) et son moyen d'ébavurage associé à l'endroit de coupage désiré le long de l'extension longitudinale d'une brame (2) tenue par ledit moyen (4) pour tenir une brame (2) pour l'oxycouper audit endroit de coupage désiré, pouvant être déplacée le long desdits plans d'appui obliques pour la placer en cavalier sur ledit second plan d'appui oblique pour l'oxycoupage d'une brame chargée sur ledit deuxième moyen (4) pour tenir une brame (2) audit endroit de coupage désiré.

12. Dispositif selon la revendication 11, **caractérisé par** un poste de travail placé en ligne entre ledit moyen (4) pour tenir une brame et ledit deuxième moyen (4) pour tenir une brame, ledit poste de travail comprenant une suite de rouleaux (5,6) placés par paires en équerre pour recevoir une brame (2) sur chant sous un angle de -10° à -20° par rapport au plan vertical sur un troisième plan d'appui oblique formés par ladite suite des rouleaux (5,6) placés par paires en équerre, ladite paire de règles (7,8) étant mobile à l'unisson et en cavalier sur ledit troisième plan d'appui oblique, et lesdits rouleaux (6) desdits rouleaux (5,6) recevant la brame sur chant étant motorisés pour déplacer la brame (2) dudit moyen (4) pour tenir une brame sur ledit poste de travail pour l'oxycoupage de la brame (2) et pour déplacer la brame (2) coupée dudit poste de travail sur ledit deuxième moyen (4) pour tenir une brame pour décharger la brame coupée.

13. Dispositif selon une quelconque des revendications 1 à 12, **caractérisé en ce que** lesdits moyens (4) pour tenir une brame (2) peuvent être basculés avec leur plan d'appui oblique dans une position horizontale pour charger une brame (2) ou décharger une brame (2) coupée, respectivement.

14. Dispositif d'oxycoupage de brames (2) à l'aide d'au moins un chalumeau d'oxycoupage (15), comprenant une aire (12) d'alimentation, une aire (13) d'oxycoupage pourvue dudit au moins un chalumeau d'oxycoupage (15) auquel fait face un dispositif d'ébavurage associé, et une aire (14) de déchargement des brames, des moyens (20) étant prévus pour faire circuler la brame de l'aire (12) d'alimentation vers l'aire (13) d'oxycoupage et puis vers l'aire (14) de déchargement, et le chalumeau d'oxycoupage (15) pouvant être déplacé sur une ligne perpendiculaire à l'extension longitudinale de la brame (2) d'un bord longitudinal de celle-ci vers le bord longitudinal opposé permettant de débiter les brames (2) soumises à l'opération d'oxycoupage et pouvant être arrêté en tout point quelconque de ladite ligne perpendiculaire de sorte à permettre le refendage des brames soumises à la procédure d'oxycoupage et soumises pendant l'opération d'oxycoupage à un mouvement en direction de l'extension longitudinale de la brame (2) **caractérisé en ce que** la brame arrive dans ladite aire d'oxycoupage avec son plan principal se trouvant en position horizontale.

15. Dispositif d'oxycoupage de brames selon la revendication 14, **caractérisé en ce que** l'aire (12) d'alimentation et/ou l'aire (14) de déchargement comprend une table élévatrice (18,19) ajustable de sorte que son plan de support se trouve au niveau de l'aire (13) d'oxycoupage.

16. Dispositif d'oxycoupage de brames selon la revendication 15, **caractérisé en ce que** l'aire (13) d'oxycoupage est constitué d'un nombre suffisant de rouleaux (17) de support à axe perpendiculaire à la direction (22) de déplacement des brames (2) de l'aire (12) d'alimentation vers l'aire (14) de déchargement formant un plan d'appui, ledit au moins un chalumeau d'oxycoupage (15) et son dispositif d'ébavurage associé étant disposé dans l'espace entre deux rouleaux de support (17) voisins et de part et d'autre du plan d'appui formé par les rouleaux (17) de support.

17. Dispositif d'oxycoupage de brames selon la revendication 16, **caractérisé en ce que** les moyens (20) prévus pour faire circuler les brames (2) comprennent des pousseurs de brames dans l'aire (12) d'alimentation et des rouleaux (17) de support motorisés.

18. Dispositif selon la revendication 16, **caractérisé par** des rouleaux (17) de support motorisés supplémentaires de part et d'autre de l'aire (13) d'oxycoupage pour former un train de rouleaux de transfert et que l'aire (12) d'alimentation et l'aire (14) de déchargement sont disposés latéralement dudit train de transfert, et par des pousseurs (21) de brames pour décharger les brames (2) débitées ou refendues dans l'aire (14) de déchargement.

## Patentansprüche

1. Verfahren zum Brennschneiden einer Bramme (2) mit Hilfe mindestens eines Schneidbrenners (3) in einer Arbeitsstation, das den Schritt des Implementierens einer relativen Bewegung zwischen der Bramme (2) und dem mindestens einen Schneidbrenner umfasst, wobei die Bramme (2) sich in einer Schneideposition befindet, **dadurch gekennzeichnet, dass** die Bramme (2) in der Schneideposition so angeordnet wird, dass die Hauptebene der Bramme einen Winkel von -10° bis -20° in Bezug auf die vertikale Ebene bildet.

2. Brennschneideverfahren nach Anspruch 1, **dadurch gekennzeichnet, dass** zur Dauertätigkeit zwei Arbeitsstationen in Reihe vorgesehen sind, die Schneideposition der Bramme (2) in jeder Arbeitsstation so angeordnet ist, dass die Hauptebene der Bramme einen Winkel von -10° bis -20° in Bezug auf die vertikale Ebene bildet, und jede der Stationen zum Aufladen, Brennschneiden und Ausladen einer zu schneidenden Bramme (2) verwendet wird und das Brennschneiden abwechselnd auf einer der zwei Arbeitsstationen vorgenommen wird.

3. Brennschneideverfahren nach Anspruch 2, **dadurch gekennzeichnet, dass** eine der Arbeitsstationen zum Aufladen der zu schneidenden Bramme (2) und die andere der Arbeitsstationen zum Ausladen der geschnittenen Bramme (2) dient, wobei eine zusätzliche Arbeitsstation in Reihe zwischen den beiden Arbeitsstationen vorgesehen ist, um das Brennschneiden der Bramme (2) in einer Schneideposition bei -10° bis -20° der Vertikalen durchzuführen, die zu schneidende Bramme (2), die auf die Aufladearbeitsstation geladen wurde, von der Aufladearbeitsstation zur zusätzlichen Arbeitsstation und anschließend auf die Ausladearbeitsstation verschoben wird, um die geschnittene Bramme dort auszuladen, wobei die Bramme (2) zum Zeitpunkt ihres Durchlaufens der zusätzlichen Arbeitsstation dem Brennschneidevorgang unterzogen wird.

4. Brennschneideverfahren nach einem beliebigen der Ansprüche 1 bis 3, **dadurch gekennzeichnet, dass** die Bramme (2) während des Brennschneidens getrennt wird.

5. Brennschneideverfahren nach einem beliebigen der Ansprüche 1 oder 2, **dadurch gekennzeichnet, dass** die Bramme (2) zum Zeitpunkt der relativen Bewegung zwischen der Bramme (2) und dem Schneidbrenner (3) zugeschnitten wird.

6. Brennschneideverfahren nach Anspruch 3, **dadurch gekennzeichnet, dass** die Bramme (2) in der zusätzlichen Arbeitsstation angehalten wird, um die relative Bewegung zwischen der Bramme (2) und dem Schneidbrenner (3) zum Zuschneiden der Bramme anzuwenden.

7. Brennschneideverfahren nach Anspruch 1, **dadurch gekennzeichnet, dass** die Brammen (2) kontinuierlich aufgeladen werden, um vor den Schneidbrenner (3) befördert und dann gemäß der Richtung der relativen Bewegung zwischen jeder Bramme (2) und dem Schneidbrenner (3) getrennt oder zugeschnitten zu werden.

8. Vorrichtung zum Umsetzen des Verfahrens nach einem beliebigen der Ansprüche 1 bis 7, die mindestens einen Schneidbrenner (3) zum Brennschneiden einer Bramme durch Implementieren einer relativen Bewegung zwischen der Bramme und dem Schneidbrenner (3) umfasst, **gekennzeichnet durch** ein Mittel (4) zum Halten einer zu schneidenden Bramme (2) derart, dass die Hauptebene der Bramme einen Winkel von -10° bis -20° in Bezug auf eine vertikale Ebene bildet.

9. Vorrichtung nach Anspruch 9, **dadurch gekennzeichnet, dass** das Mittel (4) zum Halten einer Bramme (2) Rollen (5, 6) umfasst, die paarweise im rechten Winkel angeordnet sind, um die zu schneidende Bramme hochkant unter dem Winkel von -10° bis -20° aufzunehmen und zu halten und eine schräge Auflageebene zu bilden.

10. Vorrichtung nach Anspruch 9, **gekennzeichnet durch** mindestens ein Paar von Lehren (7, 8), die im Einklang entlang der und ungezwungen auf der schrägen Auflagefläche des Mittels (4) zum Halten einer Bramme (2) beweglich sind und jeweils einen der mindestens einen Schneidbrenner (3) und dessen zugehörige Entgratungsvorrichtung aufnehmen, um den einen Schneidbrenner (3) und dessen zugehöriges Entgratungsmittel an einer gewünschten Schneidestelle entlang der longitudinalen Erweiterung einer Bramme (2), die von dem Mittel (4) zum Halten einer Bramme (2) gehalten wird, anzuordnen, um an der gewünschten Schneidestelle das Brennschneiden vorzunehmen.

11. Vorrichtung nach Anspruch 9, **dadurch gekennzeichnet, dass** zum Dauerbetrieb des Brennschneidens von Brammen (2) folgende Elemente in Reihe vorgesehen sind: ein zweites Mittel (4) zum Halten einer Bramme (2) derart, dass die Hauptebene der Bramme (2) einen identischen Winkel von -10° bis -20° in Bezug auf die vertikale Ebene bildet, wobei das zweite Mittel (4) zum Halten einer Bramme (2) ebenfalls Rollen (5, 6) umfasst, die paarweise im rechten Winkel angeordnet sind, um die zu schneidende Bramme (2) hochkant unter dem Winkel von -10° bis -20° aufzunehmen und zu halten und eine zweite schräge Auflageebene zu bilden, wobei das mindestens eine Paar von Lehren (7, 8), die im Einklang entlang der und ungezwungen auf der schrägen Auflagefläche des Mittels (4) zum Halten einer Bramme (2) beweglich sind und jeweils einen der mindestens einen Schneidbrenner (3) und dessen zugehörige Entgratungsvorrichtung aufnehmen, um den einen Schneidbrenner (3) und dessen zugehöriges Entgratungsmittel an einer gewünschten Schneidestelle entlang der longitudinalen Erweiterung einer Bramme (2), die von dem Mittel (4) zum Halten einer Bramme (2) gehalten wird, anzuordnen, um an der gewünschten Schneidestelle das Brennschneiden vorzunehmen, entlang der schrägen Auflageflächen verschoben werden können, um sie ungezwungen auf der zweiten schrägen Auflagefläche zum Brennschneiden einer Bramme, die auf dem zweiten Mittel (4) zum Halten einer Bramme (2) aufgeladen wurde, an der gewünschten Schneidestelle anzuordnen.

12. Vorrichtung nach Anspruch 11, **gekennzeichnet durch** eine Arbeitsstation, die in Reihe zwischen dem Mittel (4) zum Halten einer Bramme und dem zweiten Mittel (4) zum Halten einer Bramme angeordnet ist, wobei die Arbeitsstation eine Folge von Rollen (5, 6) umfasst, die paarweise im rechten Winkel angeordnet sind, um eine Bramme (2) hochkant unter einem Winkel von -10° bis -20° in Bezug auf die vertikale Ebene auf einer dritten schrägen Auflagefläche aufzunehmen, die von der Folge von Rollen (5, 6) gebildet wird, die paarweise im rechten Winkel angeordnet sind, wobei das Paar von Lehren (7, 8) im Einklang und ungezwungen auf der dritten schrägen Auflagefläche beweglich ist und die Rollen (6) der Rollen. (5, 6), die die Bramme hochkant aufnehmen, motorisiert sind, um die Bramme (2) zum Mittel (4) zum Halten einer Bramme auf der Arbeitsstation zum Brennschneiden der Bramme (2) und die geschnittene Bramme (2) zur Arbeitsstation auf dem zweiten Mittel (4) zum Halten einer Bramme zum Ausladen der geschnittenen Bramme zu verschieben.

13. Vorrichtung nach einem beliebigen der Ansprüche 1 bis 12, **dadurch gekennzeichnet, dass** die Mittel (4) zum Halten einer Bramme (2) mit sich in einer horizontalen Position befindender Auflagefläche gekippt werden können, um eine Bramme (2) aufzuladen bzw. eine geschnittene Bramme (2) auszuladen.

14. Vorrichtung zum Brennschneiden von Brammen (2) mit Hilfe mindestens eines Schneidbrenners (15), die einen Zuführbereich (12), einen Brennschneidebereich (13), der mit dem mindestens einen Schneidbrenner (15) ausgestattet ist, der so ausgelegt ist, dass er einer zugehörigen Entgratungsvorrichtung gegenüberliegt, und einen Bereich (14) zum Ausladen von Brammen umfasst, wobei Mittel (20) vorgesehen sind, um die Bramme vom Zuführbereich (12) in Richtung des Brennschneidebereichs (13) und dann in Richtung des Ausladebereichs (14) umlaufen zu lassen, und der Schneidbrenner (15) auf einer senkrechten Linie zur longitudinalen Erweiterung der Bramme (2) einer longitudinalen Seite dieser in Richtung der gegenüberliegenden longitudinalen Seite verschoben werden kann, was das Zuschneiden der Brammen (2) ermöglicht, die dem Brennschneidevorgang unterzogen werden, und an jedem beliebigen Punkt der senkrechten Linie angehalten werden kann, um so das Spalten der Brammen zu ermöglichen, die dem Brennschneideprozess und während des Brennschneidevorgangs einer Bewegung in Richtung der longitudinalen Erweiterung der Bramme (2) unterzogen werden, **dadurch gekennzeichnet, dass** die Bramme an dem Brennschneidebereich mit sich in horizontaler Position befindender Hauptebene ankommt.

15. Vorrichtung zum Brennschneiden von Brammen nach Anspruch 14, **dadurch gekennzeichnet, dass** der Zuführbereich (12) und/oder der Ausladebereich (14) einen Hebetisch (18, 19) umfassen bzw. umfasst, der derart einstellbar ist, dass seine Stützebene sich auf der Höhe des Brennschneidebereichs (13) befindet.

16. Vorrichtung zum Brennschneiden von Brammen nach Anspruch 15, **dadurch gekennzeichnet, dass** der Brennschneidebereich (13) aus einer zum Stützen der senkrechten Achse in der Richtung (22) der Verschiebung von Brammen (2) vom Zuführbereich (12) in Richtung des Ausladebereichs (14) ausreichenden Anzahl von Rollen (17) besteht, die eine Auflagefläche bilden, wobei der mindestens eine Schneidbrenner (15) und seine zugehörige Entgratungsvorrichtung im Raum zwischen zwei benachbarten Stützrollen (17) und zu beiden Seiten der Auflagefläche, die von den Stützrollen (17) gebildet wird, eingerichtet werden.

17. Vorrichtung zum Brennschneiden von Brammen nach Anspruch 16, **dadurch gekennzeichnet, dass** die Mittel (20), die zum Umlaufenlassen der Brammen (2) vorgesehen sind, Brammenschiebeeinrichtungen im Zuführbereich (12) und motorisierte Stützrollen (17) umfassen.

18. Vorrichtung nach Anspruch 16, **gekennzeichnet durch** zusätzliche motorisierte Stützrollen (17) zu beiden Seiten des Brennschneidebereichs (13), um ein Transportrollenwerk zu bilden, wobei der Zuführbereich (12) und der Ausladebereich (14) seitlich des Transportwerks eingerichtet sind, und **durch** Brammenschiebeeinrichtungen (21) zum Ausladen der zugeschnittenen oder gespaltenen Brammen (2) im Ausladebereich (14).

## Claims

1. An oxygen cutting process of a slab (2) using at least one oxygen-cutting torch (3) at a workstation, comprising the step of implementing relative motion between the slab (2), and the at least one oxygen cutting torch, the slab (2) being held in a cutting position, wherein in the cutting position, the slab (2) is placed so that the main plane of the slab forms an angle ranging from -10° to -20° with respects to the vertical plane.

2. The oxygen cutting process according to claim 1, wherein for continuous flow of manufacturing two workstations are used on-line, and that at each work station the cutting position of the slab (2) is held in place so that the main plane of the slab forms an angle ranging from -10° to -20°, with respects to the vertical plane, and that each of the workstations are used for loading, oxygen cutting and unloading of a slab (2) intended for cutting, and that oxygen-cutting occurs alternatively at one of the workstations.

3. The oxygen cutting process according to claim 2, wherein one of the workstations is used for loading of the slab (2) intended for cutting, and the other workstation is used for unloading the cut slab (2), and that an additional workstation is used on-line, between both of said workstations, said additional workstation being dedicated to oxygen cutting of the slab (2), held in a cutting position, -10° to -20° with respects to the vertical plane, and that the slab (2) intended for cutting, which is loaded onto the loading workstation is moved from the loading workstation to said additional workstation, and then onto the unloading workstation, in view of unloading the cut slab, the slab (2) being submitted to oxygen-cutting during transit onto the additional workstation.

4. The oxygen cutting process according to any one of the claims 1 to 3, wherein the slab (2) is split during oxygen cutting.

5. The oxygen cutting process according to any one of claims 1 or 2, wherein the slab (2) is cut up during the relative motion between slab (2), and the oxygen-cutting torch (3).

6. The oxygen cutting process according to claim 3, wherein the slab (2) is halted at the additional workstation, so as to use the relative motion between the slab (2), and the oxygen-cutting torch (3), to cut up the slab.

7. The oxygen cutting process according to claim 1, wherein the slabs (2) are continuously loaded for transfer to the oxygen-cutting torch (3), and are then split or cut up according to the direction of the relative motion between the slab (2), and the oxygen-cutting torch (3).

8. A device for implementing the process according to any one of claims 1 to 7, comprising at least one oxygen-cutting torch (3) for oxygen cutting of a slab using relative motion between the slab and the oxygen-cutting torch (3), wherein means (4) are used to hold in place a slab (2) intended for cutting, so that the main plane of the slab forms an angle ranging from - 10° to -20° with respects to a vertical plane.

9. The device according to claim 8, wherein said means (4), used to hold in place a slab (2), comprise rollers (5, 6), positioned in dovetailed pairs to receive and to hold in place the slab intended for cutting, at an angle ranging from -10° to -20°, and to form an oblique support plane.

10. The device according to claim 9, wherein at least one pair of mobile rulers (7, 8), level along and across said oblique support plane of the means (4) to hold in place a slab (2), and each receiving one of said at least one oxygen-cutting torch (3) and associated deburring device, are used to position said oxygen-cutting torch (3) and the associated deburring device at the required cutting point along the longitudinal extension of a slab (2), held in place using said means (4), designed to hold in place a slab (2) for oxygen cutting at said required cutting point.

11. The device according to claim 9, wherein for the continuous flow of oxygen cutting of slabs (2), there is used on-line: a second means (4) designed to hold in place a slab (2) so that the main plane of the slab (2) forms the same angle ranging from -10° to -20° with respects to the vertical plane, said second means (4) designed to hold in place a slab (2) also comprising rollers (5, 6) positioned in dovetailed pairs to receive and to hold in place the slab (2) intended for cutting, at the angle ranging from -10° to -20° with respects to the vertical plane, and to form a second oblique support plane, said at least one pair of mobile rulers (7, 8), level along and across said oblique support plane of means (4), designed to hold in place a slab (2), and each receiving one of said at least one oxygen-cutting torch (3) and the associated deburring device, in view of positionning said oxygen-cutting torch, and the associated means of deburring, at the required cutting point along the longitudinal extension of the slab (2), held in place by said means (4), designed to hold in place a slab (2), for oxygen cutting at said required cutting point, and said slab movable along said oblique support planes, intended to place the slab across said second oblique support plane for oxygen-cutting of a slab, loaded on the second said means (4), designed to hold in place a slab (2), at said required cutting point.

12. The device according to claim 11, wherein a workstation is located on-line between said means (4) designed to hold in place a slab, and said second means (4) designed to hold in place a slab, said workstation comprising a series of rollers (5, 6), positioned in dovetailed pairs to receive a slab (2), at an angle ranging from -10° to -20° with respects to the vertical plane, onto a third oblique support plane consisting of said series of rollers (5, 6), positioned in dovetailed pairs, said pair of rulers (7, 8) being mobile, level along and across said third oblique support plane, and said rollers (6) of said rollers (5, 6), receiving the slab at an angle, being motorized in view of moving the slab (2) from said means (4), designed to hold in place a slab, to said workstation for oxygen-cutting of a slab (2), and of transferring the cut slab (2) from said workstation to said second means (4), designed to hold in place a slab, for unloading of the cut slab.

13. The device according to any one of claims 1 to 12, wherein said means (4), designed to hold in place a slab (2), may be tipped, together with said oblique support planes, to a horizontal position, so as to respectively load a slab (2), or unload a cut slab (2).

14. An oxygen-cutting device for slabs (2) using at least one oxygen-cutting torch (15), comprising a feed area (12), an oxygen-cutting area (13) equipped with said at least one oxygen-cutting torch (15), in front of which there is an associated deburring device, and a deburring area (14) for said slabs, means (20) having been provided to transfer the slab from the feed area (12), to the oxygen-cutting area (13), and subsequently to the unloading area (14), and the oxygen-cutting torch (15) being able to move in a direction that is perpendicular to the longitudinal extension of the slab (2), from one longitudinal side of the latter towards the opposite longitudinal side, in a manner that affords cutting up the slabs (2), submitted to the oxygen-cutting procedure, and able to be halted at any given point of the perpendicular direction, so as to enable splitting of the slabs submitted to the oxygen-cutting procedure, and submitted during the oxygen-cutting process to a movement in the direction of the longitudinal extension of the slab (2), wherein the slab arrives in said oxygen-cutting area with the main plane in a horizontal position.

15. The oxygen-cutting device for slabs according to claim 14, wherein the feed area (12), and/or the unloading area (14), comprises an elevation bench (18, 19) that is adjustable, so that the support plane becomes level with the oxygen-cutting area (13).

16. The oxygen-cutting device for slabs according to claim 15, wherein the oxygen-cutting area (13) consists of a sufficient number of support rollers (17), with an axis that is perpendicular to the direction (22) of the movement of the slabs (2) from the feed area (12), to the unloading area (14), forming a support plane, said at least one oxygen-cutting torch (15) and the associated deburring device being positioned in the space between two proximal support rollers (17), and on either side of the support plane consisting of the support rollers (17).

17. The oxygen-cutting device for slabs according to claim 16, wherein the means (20) used to move the slabs (2), comprise slab pushers, designed to push the slab into the feed area (12), and motorized support rollers (17).

18. The oxygen-cutting device for slabs according to claim 16, wherein additional motorized support rollers (17), on either side of the oxygen-cutting area (13), consist of a transfer roller table, and the feed area (12) and the unloading area (14) are located laterally with respects to the transfer roller table, and there are slab pushers (21) designed to unload the cut up or split slabs (2) onto the unloading area (14).
